(19) Europäisches Patentamt
European Patent Office
Office européen des brevets

(11) EP 1 570 018 B1

(12) # EUROPÄISCHE PATENTSCHRIFT

(45) Veröffentlichungstag und Bekanntmachung des Hinweises auf die Patenterteilung:
**06.08.2008 Patentblatt 2008/32**

(21) Anmeldenummer: **03775330.8**

(22) Anmeldetag: **11.11.2003**

(51) Int Cl.:
***C09J 133/06*** *(2006.01)* ***C09J 4/00*** *(2006.01)*

(86) Internationale Anmeldenummer:
**PCT/EP2003/012546**

(87) Internationale Veröffentlichungsnummer:
**WO 2004/050784 (17.06.2004 Gazette 2004/25)**

(54) **HAFTKLEBEMASSE AUF POLY(METH)ACRYLATBASIS**

POLY(METH)ACRYLATE-BASED PRESSURE-SENSITIVE ADHESIVE

MASSE AUTO-ADHESIVE A BASE DE POLY(METH)ACRYLATE

(84) Benannte Vertragsstaaten:
**DE ES FR GB IT**

(30) Priorität: **04.12.2002 DE 10256511**

(43) Veröffentlichungstag der Anmeldung:
**07.09.2005 Patentblatt 2005/36**

(73) Patentinhaber: **tesa AG**
**20253 Hamburg (DE)**

(72) Erfinder:
- **HUSEMANN, Marc**
  **22605 Hamburg (DE)**
- **ZÖLLNER, Stephan**
  **21244 Buchholz/Nordheide (DE)**

(74) Vertreter: **Stubbe, Andreas et al**
**tesa AG**
**Quickbornstrasse 24**
**20253 Hamburg (DE)**

(56) Entgegenhaltungen:
**EP-A- 1 097 978**
**EP-A- 1 188 802**
**WO-A-95/13328**
**WO-A-98/24978**

- **PATENT ABSTRACTS OF JAPAN vol. 014, no. 115 (C-0696), 5. März 1990 (1990-03-05) & JP 01 315409 A (SEKISUI CHEM CO LTD), 20. Dezember 1989 (1989-12-20)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft Haftklebemassen auf Poly(meth)acrylatbasis, die eine gleichmäßige Klebkraft über einen weiten Abzugsgeschwindigkeitsbereich aufweisen, sowie deren Verwendung als Haftklebebänder.

Für industrielle Anwendungen werden sehr häufig Acrylathaftklebebänder eingesetzt. Dies gilt insbesondere für Verklebungen, die in einem weiten Temperaturbereich vorgenommen werden oder wo Lösemittelbeständigkeit erforderlich ist, wo die Haftklebemasse transparent sein sollte und letztendlich die Haftklebemasse unter Sauerstoff oder Ozon auch nicht altern und somit witterungsstabil sein sollte.

Für diese Anwendungen haben sich Acrylathaftklebemassen bewährt. Aus der JP 01315409 A sind Haftklebemassen mit guten Haftklebeigenschaften bekannt, insbesondere für die Verklebung auf Polyolefinen. Die Haftklebemassen basieren auf einer Zusammensetzung enthaltend Methacrylate, weitere copolymerisierbare Monomere, Isobornylacrylat und polaren Monomeren.

Die WO 95/13328 A offenbart Haftklebemassen auf Basis eines Blends enthaltend

(a) polymerisierbare Monomeren oder einen Polymersirup umfassend (i) Acrylsäureester monohydrischer Alkohole, (ii) nicht-polare ethylenisch ungesättigte Monomere und (iii) polare ethylenisch ungesättigte Monomere, sowie
(b) eine Harzkomponente. Die Haftklebemassen dienen insbesondere als permanente Klebmassen für Anwendungen, in denen Lösemittelfestigkeit erfordert wird.

Ein Nachteil dieser Haftklebemassen ist, dass Polyacrylate in der Regel relativ polar sind (durch die Vielzahl der Estergruppierungen) und daher polare Wechselwirkungen mit dem Substrat ausbilden. Als Folge steigt mit der Zeit die Klebkraft an und das Haftklebeband lässt sich nur schwer wieder entfernen. Eine weitere negative Eigenschaft ist die schwere Ablösbarkeit von Acrylathaftklebemassen insbesondere bei hohen Abzugsgeschwindigkeiten. Mit ansteigender Abzugsgeschwindigkeit nimmt ebenfalls die erforderliche Kraft zur Ablösung des Acrylathaftklebebandes vom Substrat zu. Diese Eigenschaften sind nicht erwünscht, da eine Vielzahl von Anwendungen existieren, wo nach einer bestimmten Verklebungszeit das Haftklebeband wieder entfernt wird und dieser Vorgang zu meist von Hand vorgenommen wird. Weiterhin sollte dieser Ablösegang sehr schnell und effizient verlaufen, d. h. der Anwender möchte in kürzester Zeit das Haftklebeband wiederum entfernen und hierfür einen möglichst geringen Arbeitsaufwand betreiben. Letztendlich sollten auf dem verklebten Substrat keine Rückstände verbleiben, da diese wiederum aufwendig entfernt werden müssten.

Haftklebemassen wurden bisher wenig im Hinblick auf eine variable Abzugsgeschwindigkeit untersucht.

In US 4,339,485 wurde die Abzugsgeschwindigkeit variiert zur Untersuchung des Releasematerials,

US 5,925,456 ist ein exemplarisches Beispiel für die Messung einer Acrylathaftklebemasse bei einer konstanten Abzugeschwindigkeit.

In US 4,358,494 wurde dagegen Polyacrylathaftklebebänder mit unterschiedlichen Abzugsgeschwindigkeiten abgerollt. Hier wurde bestätigt, dass die Kraft zum Abrollen dieser Haftklebebänder stark von der Abzugsgeschwindigkeit abhängt.

Somit besteht ein Bedarf für eine Acrylathaftklebemasse, die rückstandsfrei vom Substrat entfernt werden kann und über einen weiten Abzugsgeschwindigkeitsbereich eine gleichmäßige Sofortklebkraft besitzt.

Überraschenderweise und für den Fachmann nicht vorhersehbar wird die Aufgabe gelöst durch die erfindungsgemäßen Haftklebemassen, wie sie im Hauptanspruch sowie in den Unteransprüchen dargestellt sind.

Demnach betrifft die Erfindung eine Haftklebemasse auf Polyacrylatbasis, die ein Polymer mit 15 bis 40 Gew.-% Isobomylacrylat-Einheiten bezogen auf die Monomermischung enthält. Die daraus hergestellte Haftklebemasse besitzt in einem Abzugsgeschwindigkeitsbereich von 0,1 cm/Minute bis 100 m/Minute eine Klebkraft (im Sinne einer Sofortklebkraft; Schälwinkel 180°, vgl. Test A) in einem Toleranzbereich von $\pm$15 %. d.h., dass eine mit dieser Haftklebemasse hergestellte wiederlösbare Klebverbindung, beispielsweise auf Stahl, mit einem gleichbleibenden Kraftaufwand, weitgehend unabhängig von der Abzugsgeschwindigkeit, wieder gelöst werden kann.

Die Haftklebemasse enthält ein Polymer aus einer Monomermischung aus zumindest den folgenden Komponenten:

a) 60 bis 85 Gew.-% (bezogen auf die Monomermischung) Acrylsäureester und/oder Methacrylsäureester mit der folgenden Formel $CH_2 = C(R_1)(COOR_2)$, wobei $R_1$ = H oder $CH_3$ und $R_2$ ein linearer oder verzweigter Alkylrest mit 1 bis 14 C-Atomen ist,
b) 15 bis 40 Gew.-% (bezogen auf die Monomermischung) Isobornylacrylat.

Die Angaben in Gewichtsprozent beziehen sich auf diese Grundmischung. Es können weitere Komponenten vorgesehen sein, wobei sich dann die Gewichtsanteile bezogen auf das Gesamtgewicht entsprechend verschieben. Die Mindestmenge Isobornylacrylat sollte, wie an den Beispielen zu dieser Erfindung zu ersehen, deutlich über 5 Gew.-% liegen,

um eine Vergleichmäßigung der Abzugskräfte über die Geschwindigkeit erreichen zu können. Eine sinnvolle Untergrenze kann jedoch im Einzelfall am Anwendungsfall erprobt werden.

Die Haftklebemasse enthält thermische Vernetzer.

Sehr bevorzugt werden für Monomere im Sinne der Komponente a) Acrymomonere eingesetzt, die Acryl- und Methacrylsäureester mit Alkylgruppen bestehend aus 4 bis 14 C-Atomen, bevorzugt 4 bis 9 C-Atomen umfassen. Spezifische Beispiele, ohne sich durch diese Aufzählung einschränken zu wollen, sind n-Butylacrylat, n-Pentylacrylat, n-Hexylacrylat, n-Heptylacrylat, n-Octylacrylat, n-Nonylacrylat, Laurylacrylat und deren verzweigten Isomere, wie z.B. 2-Ethylhexylacrylat oder Isooctylacrylat. Weitere einzusetzende Verbindungsklassen, die ebenfalls, bevorzugt in geringen Mengen, unter a) hinzugesetzt werden können, sind z. B. die korrespondierenden Methacrylate,

In einer bevorzugten Ausführungsform der erfindungsgemäßen Haftklebemasse sind der Monomermischung als Komponente c) bis zu 30 Gew.-% olefinisch ungesättigte Monomere mit funktionellen Gruppen zugesetzt.

Für die Monomere der Komponente c) werden Vinylester, Vinylether, Vinylhalogenide, Vinylidenhalogenide, Vinylverbindungen mit aromatischen Cyclen und Heterocyclen in $\alpha$-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril. In einer weiteren sehr bevorzugten Vorgehensweise werden für die Monomere der Komponente c) Monomere mit folgenden funktionellen Gruppen eingesetzt: Hydroxy-, Carboxy-, Epoxy-, Säureamid-, Isocyanato- oder Aminogruppen.

In einer weiteren vorteilhaften Variante werden für die Komponente c) Acrylmonomere entsprechend der folgenden allgemeinen Formel eingesetzt,

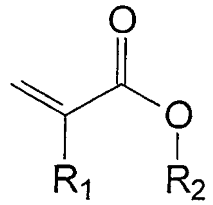

wobei $R_1$ = H oder $CH_3$ ist und der Rest $-OR_2$ die funktionelle Gruppe der Haftklebemasse darstellt oder beinhaltet und z.B. in einer besonders bevorzugten Auslegung eine H-Donor Wirkung besitzt, die eine UV-Vernetzung erleichtert.

Besonders bevorzugte Beispiele für die Komponente c) sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Acrylamid und Glyceridylmethacrylat, Benzylacrylat, Benzylmethacrylat, Phenylacrylat, Phenylmethacrylat, t-Butylphenylacrylat, t-Butylaphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmeth-acrylat, Diethylaminoethylacrylat, Cyanoethylmethacrylat, Cyanoethylacrylat, Gycerylmethacrylat, 6-Hydroxyhexylmethacrylat, N-tert.-Butylacrylamid, N-Methylolmethacrylamid, N-(Buthoxy-methyl)methacrylamid, N-Methylolacrylamid, N-(Ethoxymethyl)acrylamid, N-Isopropylacrylamid, Vinylessigsäure, Tetrahydrofurfuryl-acrylat, $\beta$-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren bevorzugten Ausführungsform der erfindungsgemäßen Haftklebemasse werden für die Komponente c) aromatische Vinylverbindungen eingesetzt, wobei bevorzugt die aromatischen Kerne aus $C_4$- bis $C_{18}$-Bausteinen bestehen und auch Heteroatome enthalten können. Besonders bevorzugte Beispiele sind Styrol, 4-Vinylpyridin; N-Vinylphthalimid, Methylstyrol, 3,4-Dimethoxystyrol, 4-Vinylbenzoesäure.

Zur Polymerisation werden die Monomere dermaßen gewählt, daß die resultierenden Polymere als Hitze-aktivierbare Haftklebemassen eingesetzt werden können, insbesondere derart, daß die resultierenden Polymere haftklebende Eigenschaften entsprechend des "Handbook of Pressure Sensitive Adhesive Technology" von Donatas Satas (van Nostrand, New York 1989) besitzen. Für diese Anwendungen liegt die statische Glasübergangstemperatur des resultierenden Polymers vorteilhaft oberhalb 30 °C.

Zur Erzielung einer Glasübergangstemperatur $T_{G,A}$ der Polymere von $T_{G,A} \geq 30$ °C werden entsprechend dem vorstehend gesagten die Monomere sehr bevorzugt derart ausgesucht und die mengenmäßige Zusammensetzung der Monomermischung vorteilhaft derart gewählt, dass sich nach der ***Fox***-Gleichung (G1) (vgl. T.G. Fox, Bull. Am. Phys. Soc. 1 (1956) 123) der gewünschte $T_{G,A}$-Wert für das Polymer ergibt.

$$\frac{1}{T_G} = \sum_n \frac{w_n}{T_{G,n}} \qquad (G1)$$

Hierin repräsentiert n die Laufzahl über die eingesetzten Monomere, $W_n$ den Massenanteil des jeweiligen Monomers n (Gew.-%) und $T_{G,n}$ die jeweilige Glasübergangstemperatur des Homopolymers aus den jeweiligen Monomeren n in K.

Zur Herstellung der Polyacrylathaftklebemassen werden konventionelle radikalische Polymerisationen oder kontrollierte radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich hierfür jedoch alle für Acrylate bekannten üblichen Initiatoren. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet.

Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropyl-percarbonat, t-Butylperoktoat, Benzpinacol. In einer sehr bevorzugten Auslegung wird als radikalischer Initiator 1,1'-Azo-bis-(cyclohexancarbonsäurenitril) (Vazo 88™ der Fa. DuPont) verwendet.

Die mittleren Molekulargewichte $M_n$ der bei der kontrollierte radikalischen Polymerisation entstehenden Haftklebemassen werden derart gewählt, daß sie in einem Bereich von 20.000 und 2.000.000 g/mol liegen; speziell für die weitere Verwendung als Schmelzhaftkleber werden Haftklebemassen mit mittleren Molekulargewichten $M_n$ von 100.000 bis 500.000 g/mol hergestellt. Die Bestimmung des mittleren Molekulargewichtes erfolgt über Größenausschlußchromatographie (Gelpermeationschromatographie, SEC oder GPC) oder Matrix-unterstützte Laser-Desorption/Ionisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel oder Gemische von Lösungsmitteln sind reine Alkane (Hexan, Heptan, Octan, Isooctan), aromatische Kohlenwasserstoffe (Benzol, Toluol, Xylol), Ester (Essigsäureethylester, Essigsäurepropyl-, butyl-, oder -hexylester), halogenierte Kohlenwasserstoffe (Chlorbenzol), Alkanole (Methanol, Ethanol, Ethylenglycol, Ethylenglycolmonomethylether) und Ether (Diethylether, Dibutylether) oder Gemische davon. Die wäßrigen Polymerisationsreaktionen können mit einem mit Wasser mischbaren oder hydrophilen Colösungsmittel versetzt werden, um zu gewährleisten, daß das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Weiterhin kann es von Vorteil sein, die Polyacrylathaftklebemasse über ein anionisches Polymerisationsverfahren herzustellen. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.

Das lebende Polymer wird in diesem Fall im allgemeinen durch die Struktur $P_L(A)$-Me repräsentiert, wobei Me ein Metall der Gruppe I, wie z.B. Lithium, Natrium oder Kalium, und $P_L(A)$ ein wachsender Polymerblock aus den Monomeren A ist. Die Molmasse des herzustellenden Polymers wird durch das Verhältnis von Initiatorkonzentration zu Monomerkonzentration kontrolliert. Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, daß Acrylatmonomere, wie z.B. n-Butylacrylat und 2-Ethylhexylacrylat, direkt polymerisiert werden können und nicht im Polymer durch eine Umesterung mit dem entsprechenden Alkohol generiert werden müssen.

Zur Herstellung von Polyacrylathaftklebemassen mit einer engen Molekulargewichtsverteilung eignen sich auch kontrollierte radikalische Polymerisationsmethoden. Zur Polymerisation wird dann bevorzugt ein Kontrollreagenz der allgemeinen Formel eingesetzt:

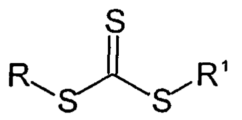

(I)

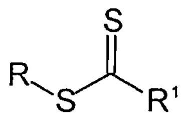

(II)

worin R und $R^1$ unabhängig voneinander gewählt oder gleich sind

- verzweigte und unverzweigte $C_1$- bis $C_{18}$-Alkylreste; $C_3$- bis $C_{18}$-Alkenylreste; $C_3$- bis $C_{18}$-Alkinylreste;
- $C_1$- bis $C_{18}$-Alkxoyreste
- durch zumindest eine OH-Gruppe oder ein Halogenatom oder einen Silylether substituierte $C_1$- bis $C_{18}$-Alkylreste; $C_3$- bis $C_{18}$-Alkenylreste; $C_3$- bis $C_{18}$-Alkinylreste;
- $C_2$-$C_{18}$-Hetero-Alkylreste mit mindestens einem O-Atom und/oder einer NR*-Gruppe in der Kohlenstoffkette, wobei R* ein beliebiger (insbesondere organischer) Rest sein kann,
- mit zumindest einer Estergruppe, Amingruppe, Carbonatgruppe, Cyanogruppe, Isocyanogruppe und/oder Epoxidgruppe und/oder mit Schwefel substituierte $C_1$-$C_{18}$-Alkylreste, $C_3$-$C_{18}$-Alkenylreste, $C_3$-$C_{18}$-Alkinylreste;
- $C_3$-$C_{12}$-Cycloalkylreste
- $C_6$-$C_{18}$- Aryl- oder Benzylreste
- Wasserstoff

darstellen.

Kontrollreagenzien des Typs (I) bestehen bevorzugt aus folgenden weiter eingeschränkten Verbindungen:

Halogenatome sind hierbei bevorzugt F, Cl, Br oder I, mehr bevorzugt Cl und Br. Als Alkyl-, Alkenyl- und Alkinylreste in den verschiedenen Substituenten eignen sich hervorragend sowohl lineare als auch verzweigte Ketten.

Beispiele für Alkylreste, welche 1 bis 18 Kohlenstoffatome enthalten, sind Methyl, Ethyl, Propyl, Isopropyl, Butyl, Isobutyl, t-Butyl, Pentyl, 2-Pentyl, Hexyl, Heptyl, Octyl, 2-Ethylhexyl, t-Octyl, Nonyl, Decyl, Undecyl, Tridecyl, Tetradecyl, Hexadecyl und Octadecyl.

Beispiele für Alkenylreste mit 3 bis 18 Kohlenstoffatomen sind Propenyl, 2-Butenyl; 3-Butenyl, Isobutenyl, n-2,4-Pentadienyl, 3-Methyl-2-butenyl, n-2-Octenyl, n-2-Dodecenyl, Isododecenyl und Oleyl.

Beispiele für Alkinyl mit 3 bis 18 Kohlenstoffatomen sind Propinyl, 2-Butinyl, 3-Butinyl, n-2-Octinyl und n-2-Octadecinyl.

Beispiele für Hydroxy-substituierte Alkylreste sind Hydroxypropyl, Hydroxybutyl oder Hydroxyhexyl.

Beispiele für Halogen-substituierte Alkylreste sind Dichlorobutyl, Monobromobutyl oder Trichlorohexyl.

Ein geeigneter $C_2$-$C_{18}$-Hetero-Alkylrest mit mindestens einem O-Atom in der Kohlenstoffkette ist beispielsweise $-CH_2-CH_2-O-CH_2-CH_3$.

Als $C_3$-$C_{12}$-Cycloalkylreste dienen beispielsweise Cyclopropyl, Cyclopentyl, Cyclohexyl oder Trimethylcyclohexyl.

Als $C_6$-$C_{18}$-Arylreste dienen beispielsweise Phenyl, Naphthyl, Benzyl, 4-tert.-Butylbenzyl-oder weitere substituierte Phenyl, wie z.B. Ethyl, Toluol, Xylol, Mesitylen, Isopropylbenzol, Dichlorobenzol oder Bromtoluol.

Die vorstehenden Auflistungen dienen nur als Beispiele für die jeweiligen Verbindungsgruppen und besitzen keinen Anspruch auf Vollständigkeit.

Weiterhin sind auch Verbindungen der folgenden Typen als Kontrollreagenzien einsetzbar

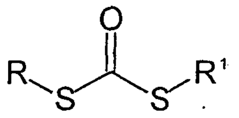 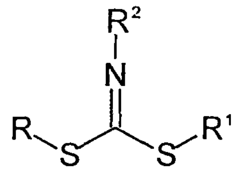

(III) (IV)

wobei $R^2$ ebenfalls unabhängig von R und $R^1$ aus der oben aufgeführten Gruppe für diese Reste gewählt werden kann.

Beim konventionellen ‚RAFT-Prozeß' wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflußt, die Restmonomere im Aufkonzentrationsprozeß das Lösemittelrecyclat verunreinigen und die entsprechenden Selbstklebebänder ein sehr hohes Ausgasungsverhalten zeigen würden. Um diesen Nachteil niedriger Umsätze zu umgehen, wird in einer besonders bevorzugten Vorgehensweise die Polymerisation mehrfach initiiert.

Als weitere kontrollierte radikalische Polymerisationsmethode können Nitroxid-gesteuerte Polymerisationen durchgeführt werden. Zur Radikalstabilisierung werden in günstiger Vorgehensweise Nitroxide des Typs (Va) oder (Vb) eingesetzt:

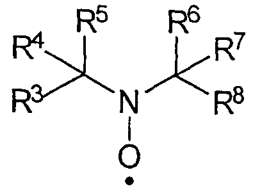 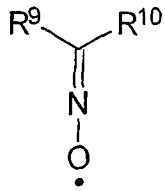

(Va) (Vb)

wobei $R^3$, $R^4$, $R^5$, $R^6$, $R^7$, $R^8$, $R^9$, $R^{10}$ unabhängig voneinander folgende Verbindungen oder Atome bedeuten:

i) Halogenide, wie z.B. Chlor, Brom oder Iod
ii) lineare, verzweigte, cyclische und heterocyclische Kohlenwasserstoffe mit 1 bis 20 Kohlenstoffatomen, die gesättigt, ungesättigt oder aromatisch sein können,
iii) Ester $-COOR^{11}$, Alkoxide $-OR^{12}$ und/oder Phosphonate $-PO(OR^{13})_2$, wobei $R^{11}$, $R^{12}$ oder $R^{13}$ für Reste aus der Gruppe ii) stehen.

Verbindungen der (Va) oder (Vb) können auch an Polymerketten jeglicher Art gebunden sein (vorrangig in dem Sinne, daß zumindest einer der oben genannten Reste eine derartige Polymerkette darstellt) und somit zum Aufbau der Blockcopolymere als Makroradikale oder Makroregler genutzt werden.

Mehr bevorzugt werden kontrollierte Regler für die Polymerisation von Verbindungen des Typs:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxy pyrrolidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl

- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-t-Butylnitroxid
- Diphenylnitroxid
- t-Butyl-t-amyl Nitroxid

US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).

Als weitere kontrollierte Polymerisationsmethode läßt sich in vorteilhafter Weise zur Synthese der Polyacrylathaftklebemassen die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

Zur Weiterentwicklung können den Polyacrylathaftklebemassen Harze beigemischt sein. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohtenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Weiterhin können optional Weichmacher (Plastifizierungsmittel), Füllstoffe (z. B. Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z.B. in Form von primären und sekundären Antioxidantien oder in Form von Lichtschutzmitteln zugesetzt sein.

Die bevorzugt nach einem der vorstehend geschilderten Verfahren hergestellten Polyacrylate werden im Weiteren vernetzt, wobei thermische Vernetzer eingesetzt werden, die unter Temperatureinwirkung reagieren.
Als Vernetzer eignen sich z. B. Metallchelate, multifunktionelle Isocyanate oder multifunktionelle Amine. Für den Fall einer zusätzlichen Vernetzung über einen radikalischen Mechanismus lassen sich auch multifunktionelle Acrylate vorteilhaft als Vernetzer verwenden.
Als thermische Vernetzer eignen sich z. B. Aluminium-(III)-acetylacetonat, Titan-(IV)-acetylacetonat oder Eisen-(III)-acetylacetonat. Es lassen sich aber auch z.B. die entsprechenden Zirkoniumverbindungen zur Vernetzung einsetzen. Neben den Acetylacetonaten eigenen sich ebenfalls die ensprechenden Metallalkoxide, wie z.B. Titan-(IV)-n-butoxid oder Titan-(IV)-isopropoxid.
Weiterhin lassen sich zur thermischen Vernetzung ebenfalls multifunktionelle Isocyanate einsetzen, wobei hier besonders auf Isocyanate der Firma Bayer mit dem Handelsnamen Desmodur™ hingewiesen sei. Weitere Vernetzer können multifunktionelle Epoxide, Aziridine, Oxazolidine oder Carbodiimide sein.

Vor der Vernetzung werden die Polyacrylate vorteilhaft auf einen Träger aufgetragen. Die Beschichtung erfolgt aus Lösung oder aus der Schmelze auf das Trägermaterial. Für den Auftrag aus der Schmelze wird das Lösemittel

bevorzugt in einem Aufkonzentrationsextruder unter vermindertem Druck abgezogen, wobei beispielsweise Ein- oder Doppelschneckenextruder eingesetzt werden können, die vorteilhaft das Lösemittel in verschiedenen oder gleichen Vakuumstufen abdestillieren und über eine Feedvorwärmung verfügen. Das Polyacrylat wird dann auf dem Träger vernetzt.

Als Trägermaterialien für die Haftklebemasse, beispielsweise für Haftklebebänder, werden die dem Fachmann geläufigen und üblichen Materialien, wie Folien (Polyester, PET, PE, PP, BOPP, PVC), Vliese, Schäume, Gewebe und Gewebefolien sowie Trennpapier (Glassine, HDPE, LDPE) verwendet. Diese Aufzählung ist nicht abschließend.

Zu einer optionalen Vernetzung mit UV-Licht können den Polyacrylathaftklebemassen UV-absorbierende Photoinitiatoren zugesetzt werden. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenyl-ethanon, Dimethoxyhydroxyacetophenon, substituierte Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London herangezogen werden.

Weiterhin ist es möglich, die Polyacrylathaftklebemasse mit Elektronenstrahlen zu vernetzen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

Schließlich betrifft die Erfindung die Verwendung der vorstehend beschriebenen Haftklebemassen beziehungsweise der wie vorstehend beschrieben hergestellten Haftklebemassen für ein ein- oder doppelseitiges Klebeband, bestehend aus zumindest einem Träger und einer Schicht einer Haftklebemasse.

Eine vorteilhafte Verwendung liegt dabei in einem Klebeband, welches einen mehrschichtigen Produktaufbau besitzt, wobei zumindest eine der Schichten aus einer erfindungsgemäßen Haftklebemasse besteht und bevorzugt eine Dicke von mindestens 5 μm, besonders bevorzugt von mindestens 10 mm aufweist.

Als Trägermaterialien für derartige Haftklebebänder lassen sich besonders gut die im vorstehenden bereits beschriebenen Trägermaterialien einsetzen.

Das erfindungsgemäße Polyacrylathaftklebemasse läßt sich rückstandsfrei und ohne Zerstörung vom Substrat entfernen, so daß insbesondere entsprechend ausgerüstete Klebebänder reversibel auf verschiedenen Substraten verklebt werden können.
Besonders bevorzugt wird auf empfindlichen Oberflächen verklebt, die leicht geschädigt werden können oder sich leicht deformieren lassen, wie z.B. Autolacke.

Die Anwendungen für solche Haftklebebänder sind sehr vielfältig. In besonders bevorzugten Auslegungen werden die erfindungsgemäßen Haftklebemassen in Haftklebebändern eingesetzt, bei denen das Trägermaterial eine kurzfristige Schutzfunktion einnimmt, d.h. das Substrat wird geschützt gegenüber äußeren Einwirkungen, wie z.B. Wasser, Säure, Base, Hitze, Oel, Benzin, Diesel, weitere Flüssigkeiten, Farbe etc.. Nach Erfüllung der Schutzfunktion wird das Haftklebeband wieder entfernt. Für diese Anwendung werden besonders bevorzugt einseitige Haftklebebänder eingesetzt.

In einer weiteren bevorzugten Auslegung werden die erfindungsgemäßen Haftklebemassen in Haftklebebänder eingesetzt, die einer temporären Verklebung von Fügeteilen dienen. Verklebt werden können hier die verschiedensten Materialien, wie z.B. Glas, Papier, Kunstoffe, Metalle, Vliese, Gewebe, Textilien und Holz. In einer besonders bevorzugten Auslegung werden die Fügeteile nach einem bestimmten Zeitraum wieder voneinander entfernt. Für diese Anwendungen werden besonders bevorzugt doppelseitige Klebebänder eingesetzt, die in einer sehr bevorzugten Auslegung aus zumindestens 3 Schichten aufgebaut sind, wobei die erfindungsgemäße Haftklebemasse zumindestens die Ober- oder Unterseite des Haftkebebandes darstellt und die Mittelschicht die Trägerschicht darstellt.

Weiterhin können die erfindungsgemäßen Haftklebemassen auch für Transferbänder (Transfertapes) eingesetzt werden. Bei diesem Ausführungsbeispiel wird die erfindungsgemäße Haftklebemasse auf eine Trennfolie oder ein Trennpapier beschichtet, so dass sich der Träger nach Aufbringen des Transferbandes von der Haftklebefolie abziehen

lässt und nur die Haftklebemasse-Schicht auf der Klebestelle zurücklässt. Der reine Haftklebebandfilm wird beispielsweise zur temporären Verklebung von Fügeteilen eingesetzt. Hierbei können die Fügeteile auch bei hohen Geschwindigkeiten leicht voneinander getrennt werden. Ebenso lassen sich die erfindungsgemäßen einseitigen Haftklebebänder auch bei hohen Abzugsgeschindigkeiten leicht vom Substrat entfernen.

**Beispiele**

Prüfmethoden

A1 - A3. Klebkraft

Die Prüfung der Schälfestigkeit (Klebkraft) erfolgte gemäß PSTC-1. Auf eine 25 μm dicke PET-Folie wird eine Haftklebeschicht mit 50 g/m$^2$ aufgebracht.
Ein 2 cm breiter Streifen dieses Musters wird auf eine Stahlplatte durch dreimaliges doppeltes Überrollen mittels einer 2 kg Rolle verklebt. Die Platte wird eingespannt und der Selbstklebestreifen über sein freies Ende an einer Zugprüfmaschine unter einem Schälwinkel von 180° mit einer Geschwindigkeit von 0.1 cm/min (Test A1), oder 1 m/min (Test A2) oder 100 m/min (Test 3) abgezogen.

B. Aufziehverhalten

Auf eine 25 μm dicke PET-Folie wird eine Haftklebeschicht mit 50 g/m$^2$ aufgebracht.
Ein 2 cm breiter Streifen dieses Musters wird auf eine Stahlplatte durch dreimaliges doppeltes Überrollen mittels einer 2 kg Rolle verklebt. Nach 96 stündiger Verklebung bei Raumtemperatur (23°C). Normaldruck und 50 % Luftfeuchtigkeit wird die Platte eingespannt und der Selbstklebestreifen über sein freies Ende an einer Zugprüfmaschine unter einem Schälwinkel von 180° mit einer Geschwindigkeit von 1 m/min abgezogen.

C. Gelpermeationschromatographie GPC

Die Bestimmung des mittleren Molekulargewichtes $M_n$ und der Polydisperistät PD erfolgte über die Gelpermeationschromatographie. Als Eluent wurde THF mit 0,1 Vol.-% Trifluoressigsäure eingesetzt. Die Messung erfolgte bei 25 °C. Als Vorsäule wurde PSS-SDV, 5 μ, $10^3$ Å, ID 8,0 mm x 50 mm verwendet. Zur Auftrennung wurden die Säulen PSS-SDV, 5 μ, $10^3$ sowie $10^5$ und $10^6$ mit jeweils ID 8,0 mm x 300 mm eingesetzt. Die Probenkonzentration betrug 4 g/l, die Durchflußmenge 1,0 ml pro Minute. Es wurde gegen PMMA-Standards gemessen.

**Prüfmusterherstellung**

Beispiel 1:

Ein für radikalische Polymerisationen konventioneller 2 L-Glasreaktor wurde mit 8 g Acrylsäure, 272 g 2-Ethylhexylacrylat, 120 g Isobornylacrylat und 266 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™ , Fa. DuPont) gelöst in 10 g Aceton hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN gelöst in 10 g Aceton hinzugegeben. Nach 5 Stunden Reaktionszeit wurden 0,8 g Bis-(4-tert.-Butylcyclohexanyl)-Peroxy-dicarbonat (Perkadox 16™, Fa Akzo Nobel) gelöst in 10 g Aceton hinzugegeben. Nach 6 Stunden wurde mit 100 g Siedegrenzenbenzin 60/95 verdünnt. Nach 7 Stunden Reaktionszeit wurden 0,8 g Bis-(4-tert.-Butylcyclohexanyl)-Peroxy-dicarbonat (Perkadox 16™, Fa Akzo Nobel) gelöst in 10 g Aceton hinzugegeben. Nach 10 Stunden wurde mit 150 g Siedegrenzenbenzin 60/95 verdünnt. Die Reaktion wurde nach 24 h Reaktionszeit abgebrochen und auf Raumtemperatur abgekühlt. Anschließend wurde das Polyacrylat mit 0,6 Gew.-% Aluminium-(IIII)-acetylacetonat (3 %ige Lösung Aceton) abgemischt, auf einen Feststoffgehalt von 30 % mit Siedegrenzenbenzin 60/95 verdünnt und dann aus Lösung auf eine PET-Folie auf beschichtet. Nach Trocknung für 30 Minuten bei 120 °C betrug der Masseauftrag 50 g/m$^2$. Zur Analyse der klebtechnischen Eigenschaften wurden die Testmethoden A und B durchgeführt.

Beispiel 2:

Ein für radikalische Polymerisationen konventioneller 2 L-Glasreaktor wurde mit 8 g Acrylsäure, 312 g 2-Ethylhexylacrylat, 80 g Isobornylacrylat und 266 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,2 g Azoisobutyronitril (AIBN,

Vazo 64™ , Fa. DuPont) gelöst in 10 g Aceton hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN gelöst in 10 g Aceton hinzugegeben. Nach 5 Stunden Reaktionszeit wurden 0,8 g Bis-(4-tert.-Butylcyclohexanyl)-Peroxy-dicarbonat (Perkadox 16™, Fa Akzo Nobel) gelöst in 10 g Aceton hinzugegeben. Nach 6 Stunden wurde mit 100 g Siedegrenzenbenzin 60/95 verdünnt. Nach 7 Stunden Reaktionszeit wurden 0,8 g Bis-(4-tert.-Butylcyclohexanyl)-Peroxy-dicarbonat (Perkadox 16™, Fa Akzo Nobel) gelöst in 10 g Aceton hinzugegeben. Nach 10 Stunden wurde mit 150 g Siedegrenzenbenzin 60/95 verdünnt. Die Reaktion wurde nach 24 h Reaktionszeit abgebrochen und auf Raumtemperatur abgekühlt. Anschließend wurde das Polyacrylat mit 0,6 Gew.-% Aluminium-(IIII)-acetylacetonat (3 %ige Lösung Aceton) abgemischt, auf einen Feststoffgehalt von 30 % mit Siedegrenzenbenzin 60/95 verdünnt und dann aus Lösung auf eine PET-Folie auf beschichtet. Nach Trocknung für 30 Minuten bei 120 °C betrug der Masseauftrag 50 g/m$^2$. Zur Analyse der klebtechnischen Eigenschaften wurden die Testmethoden A und B durchgeführt.

Beispiel 3:

Ein für radikalische Polymerisationen konventioneller 2 L-Glasreaktor wurde mit 8 g Acrylsäure, 332 g 2-Ethylhexylacrylat, 60 g Isobornylacrylat und 266 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont) gelöst in 10 g Aceton hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN gelöst in 10 g Aceton hinzugegeben. Nach 5 Stunden Reaktionszeit wurden 0,8 g Bis-(4-tert.-Butylcyclohexanyl)-Peroxy-dicarbonat (Perkadox 16™, Fa Akzo Nobel) gelöst in 10 g Aceton hinzugegeben. Nach 6 Stunden wurde mit 100 g Siedegrenzenbenzin 60/95 verdünnt. Nach 7 Stunden Reaktionszeit wurden 0,8 g Bis-(4-tert.-Butylcyclohexanyl)-Peroxy-dicarbonat (Perkadox 16™, Fa Akzo Nobel) gelöst in 10 g Aceton hinzugegeben. Nach 10 Stunden wurde mit 150 g Siedegrenzenbenzin 60/95 verdünnt. Die Reaktion wurde nach 24 h Reaktionszeit abgebrochen und auf Raumtemperatur abgekühlt. Anschließend wurde das Polyacrylat mit 0,6 Gew.-% Aluminium-(IIII)-acetylacetonat (3 %ige Lösung Aceton) abgemischt, auf einen Feststoffgehalt von 30 % mit Siedegrenzenbenzin 60/95 verdünnt und dann aus Lösung auf eine PET-Folie auf beschichtet. Nach Trocknung für 30 Minuten bei 120 °C betrug der Masseauftrag 50 g/m$^2$. Zur Analyse der klebtechnischen Eigenschaften wurden die Testmethoden A und B durchgeführt.

Beispiel 4:

Ein für radikalische Polymerisationen konventioneller 2 L-Glasreaktor wurde mit 8 g Acrylsäure, 252 g 2-Ethylhexylacrylat, 140 g Isobornylacrylat und 266 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont) gelöst in 10 g Aceton hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN gelöst in 10 g Aceton hinzugegeben. Nach 5 Stunden Reaktionszeit wurden 0,8 g Bis-(4-tert.-Butylcyclohexanyl)-Peroxy-dicarbonat (Perkadox 16™, Fa Akzo Nobel) gelöst in 10 g Aceton hinzugegeben. Nach 6 Stunden wurde mit 100 g Siedegrenzenbenzin 60/95 verdünnt. Nach 7 Stunden Reaktionszeit wurden 0,8 g Bis-(4-tert.-Butylcyclohexanyl)-Peroxy-dicarbonat (Perkadox 16™, Fa Akzo Nobel) gelöst in 10 g Aceton hinzugegeben. Nach 10 Stunden wurde mit 150 g Siedegrenzenbenzin 60/95 verdünnt. Die Reaktion wurde nach 24 h Reaktionszeit abgebrochen und auf Raumtemperatur abgekühlt. Anschließend wurde das Polyacrylat mit 0,6 Gew.-% Aluminium-(IIII)-acetylacetonat (3 %ige Lösung Aceton) abgemischt, auf einen Feststoffgehalt von 30 % mit Siedegrenzenbenzin 60/95 verdünnt und dann aus Lösung auf eine PET-Folie auf beschichtet. Nach Trocknung für 30 Minuten bei 120 °C betrug der Masseauftrag 50 g/m$^2$. Zur Analyse der klebtechnischen Eigenschaften wurden die Testmethoden A und B durchgeführt.

Referenzbeispiel R1:

Ein für radikalische Polymerisationen konventioneller 2 L-Glasreaktor wurde mit 8 g Acrylsäure, 372 g 2-Ethylhexylacrylat, 20 g Isobornylacrylat und 266 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™ , Fa. DuPont) gelöst in 10 g Aceton hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN gelöst in 10 g Aceton hinzugegeben. Nach 5 Stunden Reaktionszeit wurden 0,8 g Bis-(4-tert.-Butylcyclohexanyl)-Peroxy-dicarbonat (Perkadox 16™, Fa Akzo Nobel) gelöst in 10 g Aceton hinzugegeben. Nach 6 Stunden wurde mit 100 g Siedegrenzenbenzin 60/95 verdünnt. Nach 7 Stunden Reaktionszeit wurden 0,8 g Bis-(4-tert.-Butylcyclohexanyl)-Peroxy-dicarbonat (Perkadox 16™, Fa Akzo Nobel) gelöst in 10 g Aceton hinzugegeben. Nach 10 Stunden wurde mit 150 g Siedegrenzenbenzin 60/95 verdünnt. Die Reaktion wurde nach 24 h Reaktionszeit abgebrochen und auf

Raumtemperatur abgekühlt. Anschließend wurde das Polyacrylat mit 0,6 Gew.-% Aluminium-(IIII)-acetylacetonat (3 %ige Lösung Aceton) abgemischt, auf einen Feststoffgehalt von 30 % mit Siedegrenzenbenzin 60/95 verdünnt und dann aus Lösung auf eine PET-Folie auf beschichtet. Nach Trocknung für 30 Minuten bei 120 °C betrug der Masseauftrag 50 g/$m^2$. Zur Analyse der klebtechnischen Eigenschaften wurden die Testmethoden A und B durchgeführt.

Referenzbeispiel R2:

Ein für radikalische Polymerisationen konventioneller 2 L-Glasreaktor wurde mit 4 g Acrylsäure, 4 g Glycidylmethacrylat, 196 g 2-Ethylhexylacrylat, 196 g n-Butylacrylat und 266 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™ , Fa. DuPont) gelöst in 10 g Aceton hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN gelöst in 10 g Aceton hinzugegeben. Nach 5 Stunden Reaktionszeit wurden 0.8 g Bis-(4-tert.-Butylcyclohexanyl)-Peroxy-dicarbonat (Perkadox 16™, Fa Akzo Nobel) gelöst in 10 g Aceton hinzugegeben. Nach 6 Stunden wurde mit 100 g Siedegrenzenbenzin 60/95 verdünnt. Nach 7 Stunden Reaktionszeit wurden 0.8 g Bis-(4-tert.-Butylcyclohexanyl)-Peroxy-dicarbonat (Perkadox 16™, Fa Akzo Nobel) gelöst in 10 g Aceton hinzugegeben. Nach 10 Stunden wurde mit 150 g Siedegrenzenbenzin 60/95 verdünnt. Die Reaktion wurde nach 24 h Reaktionszeit abgebrochen und auf Raumtemperatur abgekühlt. Anschließend wurde das Polyacrylat mit 0.3 Gew.-% Zinkchlorid und 0.4 Gew.-% Desmodur™ L 75 (Fa. Bayer AG) abgemischt, auf einen Feststoffgehalt von 30 % mit Siedegrenzenbenzin 60/95 verdünnt und dann aus Lösung auf eine PET-Folie auf beschichtet. Nach Trocknung für 30 Minuten bei 120°C betrug der Masseauftrag 50 g/$m^2$. Zur Analyse der klebtechnischen Eigenschaften wurden die Testmethoden A B und C durchgeführt.

Referenzbeispiel R3:

Ein für radikalische Polymerisationen konventioneller 2 L-Glasreaktor wurde mit 8 g Acrylsäure, 272 g 2-Ethylhexylacrylat, 120 g Stearylacrylat und 266 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™ , Fa. DuPont) gelöst in 10 g Aceton hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN gelöst in 10 g Aceton hinzugegeben. Nach 3 Stunden Reaktionszeit wurden 100 g Siedegrenzenbenzin 60/95 hinzugegeben. Nach 5 h Reaktionszeit wurden 0,8 g Bis-(4-tert.-Butylcyclohexanyl)-Peroxy-dicarbonat (Perkadox 16™, Fa Akzo Nobel) gelöst in 100 g Siedegrenzenbenzin 60/95 hinzugegeben. Nach 6 Stunden wurde mit 100 g Siedegrenzenbenzin 60/95 verdünnt. Nach 7 Stunden Reaktionszeit wurden 0,8 g Bis-(4-tert.-Butylcyclohexanyl)-Peroxy-dicarbonat (Perkadox 16™, Fa Akzo Nobel) gelöst in 10 g Aceton hinzugegeben. Die Reaktion wurde nach 24 h Reaktionszeit abgebrochen und auf Raumtemperatur abgekühlt. Anschließend wurde das Polyacrylat mit 0,6 Gew.-% Aluminium-(IIII)-acetylacetonat (3 %ige Lösung Aceton) abgemischt, auf einen Feststoffgehalt von 30 % mit Siedegrenzenbenzin 60/95 verdünnt und dann aus Lösung auf eine PET-Folie auf beschichtet. Nach Trocknung für 30 Minuten bei 120 °C betrug der Masseauftrag 50 g/$m^2$. Zur Analyse der klebtechnischen Eigenschaften wurden die Testmethoden A und B durchgeführt.

Referenzbeispiel R4:

Ein für radikalische Polymerisationen konventioneller 2 L-Glasreaktor wurde mit 8 g Acrylsäure, 272 g 2-Ethylhexylacrylat, 120 g Laurylacrylat und 266 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™ , Fa. DuPont) gelöst in 10 g Aceton hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN gelöst in 10 g Aceton hinzugegeben. Nach 2 und 3 Stunden Reaktionszeit wurden jeweils 100 g Siedegrenzenbenzin 60/95 hinzugegeben. Nach 5 h Reaktionszeit wurden 0,8 g Bis-(4-tert.-Butylcyclohexanyl)-Peroxy-dicarbonat (Perkadox 16™, Fa Akzo Nobel) gelöst in 150 g Siedegrenzenbenzin 60/95 hinzugegeben. Nach 7 Stunden Reaktionszeit wurden 0,8 g Bis-(4-tert.-Butylcyclohexanyl)-Peroxy-dicarbonat (Perkadox 16™, Fa Akzo Nobel) gelöst in 100 g Siedegrenzenbenzin 60/95 hinzugegeben. Nach 9 Stunden Reaktionszeit wurde 100 g Siedegrenzenbenzin 60/95 hinzugegeben Die Reaktion wurde nach 24 h Reaktionszeit abgebrochen und auf Raumtemperatur abgekühlt. Anschließend wurde das Polyacrylat mit 0,6 Gew.-% Aluminium-(IIII)-acetylacetonat (3 %ige Lösung Aceton) abgemischt, auf einen Feststoffgehalt von 30 % mit Siedegrenzenbenzin 60/95 verdünnt und dann aus Lösung auf eine PET-Folie auf beschichtet. Nach Trocknung für 30 Minuten bei 120 °C betrug der Masseauftrag 50 g/$m^2$. Zur Analyse der klebtechnischen Eigenschaften wurden die Testmethoden A und B durchgeführt.

Ergebnisse

Im folgenden wurden die klebtechnischen Eigenschaften der hergestellten Polymere untersucht. Die Referenzbeispiele R1 bis R4 wurden mit einbezogen, um hier den Einfluß des Isobornylacrylates zu untersuchen und alternative Comonomere zu testen.

Die Beispiele 1 bis 4 sind dagegen erfindungsgemäße Comonomerzusammensetzungen.
In Tabelle 1 sind die klebtechnischen Daten aller Beispiele zusammengefasst - insbesondere unter Berücksichtigung der Abzugsgeschwindigkeit.

Tabelle 1:

| Beispiel | KK auf Stahl sofort[a] [N/cm] Test A1 | KK auf Stahl sofort[b] [N/cm] Test A2 | KK auf Stahl sofort[c] [N/cm] Test A2 |
|---|---|---|---|
| 1 | 4,8 | 5,0 | 5.0 |
| 2 | 3,6 | 3,9 | 3,7 |
| 3 | 3,2 | 3.5 | 3,1 |
| 4 | 5,2 | 5,6 | 5,2 |
| R1 | 2,4 | 3,0 | 3.5 |
| R2 | 2,1 | 2.5 | 3,1 |
| R3 | 0,8 | 2,0 | 7,5 |
| R4 | 0,9 | 2,5 | 8,2 |

[a]KK= Klebkraft auf Stahl bei 23 °C und 50 % Luftfeuchtigkeit; Abzugsgeschwindigkeit 0.1 cm/min.
[b]KK = Klebkraft auf Stahl bei 23 °C und 50 % Luftfeuchtigkeit; Abzugsgeschwindigkeit 1 m/min.
[c]KK = Klebkraft auf Stahl bei 23 °C und 50 % Luftfeuchtigkeit; Abzugsgeschwindigkeit 100 m/min.

Die in der Tabelle 1 aufgelisteten Daten verdeutlichen, daß die erfindungsgemäßen Polymere Haftklebemassen (Beispiele 1 bis 4) in einem Abzugsgeschwindigkeitsbereich von 0.1 cm/min bis 100 m/min eine nahezu konstante Klebkraft auf Stahl aufweisen.
Hier zeigt sich, dass insbesondere durch Zusatz von Isobornylacrylat als Comonomer sehr konstante Klebkräfte erzielt werden können. Die Beispiele 1 bis 4 belegen weiterhin, dass die Klebkraft sich nur in einem Bereich von kleiner ±15 % variiert.

Zum Vergleich wurden die Referenzbeispiele R1 bis R4 analog untersucht. In Beispiel R1 wurde Isobornylacrylat als Comonomer eingesetzt, nur mit einem Anteil von 5 %. Durch die Absenkung des Anteils reduzierte sich die Konstanz in der Klebkraft in Abhängigkeit von der Abzugsgeschwindigkeit und der Bereich von kleiner ±15 % wurde nicht mehr eingehalten. Mit Referenzbeispiel R2 wurde ein Polyacrylat untersucht, das einen unterschiedlichen Vernetzungsmechanismus aufweist. Die Vernetzung über Glycidylmethacrylat führt aber auch nicht zu einer Verbesserung. Vielmehr streuen auch hier die Klebkräfte in Abhängigkeit von der Abzugsgeschwindigkeit von 2.1 bis 3.1 N/cm.
In Referenzbeispiel R3 wurde Stearylacrylat als Comonomer eingesetzt. Durch die Substitution von Isobornylacrylat zeigte sich, dass mit steigender Abzugsgeschwinndigkeit die Klebkraft auf Stahl drastisch ansteigt. Bei 100 m/min wurde mit 7.5 N/cm der Ausgangswert von 0.8 N/cm mehr als verneunfacht. Ein ähnliches Bild zeigt sich für Referenzbeispiel R4. Auch die Substitution durch Laurylacrylat führte wiederum zu einer Verschlechterung.
Für die Anwendung als Haftklebeband mit temporärer Verklebung ist weiterhin das Aufziehverhalten von großer Bedeutung, da durch einen immensen Anstieg der Klebkräfte ebenfalls das Abzeihverhalten selbst bei geringen Abzugsgeschwindigkeiten verschlechtert werden würde. Daher wurde in folgender Tabelle 2 noch mal das Aufziehverhalten aller Beispiele untersucht.

Tabelle 2:

| Beispiel | KK auf Stahl sofort[a] [N/cm] Test A2 | KK auf Stahl nach 96 h[b] [N/cm]. Test b |
|---|---|---|
| 1 | 5,0 | 5.1 |
| 2 | 3,9 | 4.2 |
| 3 | 3.5 | 3.9 |

(fortgesetzt)

| Beispiel | KK auf Stahl sofort[a] [N/cm] Test A2 | KK auf Stahl nach 96 h[b] [N/cm]. Test b |
|---|---|---|
| 4 | 5,6 | 5.6 |
| R1 | 3,0 | 3.9 |
| R2 | 2.5 | 3.4 |
| R3 | 2,0 | 2,3 |
| R4 | 2,5 | 2.5 |
| [a]KK= Klebkraft auf Stahl bei 23 °C und 50 % Luftfeuchtigkeit sofort nach der Verklebung gemessen; Abzugsgeschwindigkeit 1 m/min.<br>[b]KK = Klebkraft auf Stahl bei 23 °C und 50 % Luftfeuchtigkeit nach 96 Stunden Verklebung; Abzugsgeschwindigkeit 1 m/min. | | |

Die gemessenen Klebkräfte belegen, dass das Aufziehverhalten der erfindungsgemäßen Haftklebemassen sehr gering ist. Das Grenzbeispiel 3 zeigt mit einem Anstieg von 3.5 auf 3.9 N/cm den größten Anstieg. Auch die Referenzbeispiele R3 und R4 zeigen ein sehr geringes oder gar kein Aufziehverhalten. Nur die Referenzbeispiele R1 und R2 ziehen deutlicher auf.

## Patentansprüche

1. Haftklebemasse enthaltend ein Polymer aus einer Monomermischung aus zumindest den folgenden Komponenten:

   a) 60 bis 85 Gew.-% (bezogen auf die Monomermischung) Acrylsäureester und/oder Methacrylsäureester mit der folgenden Formel $CH_2 = C(R_1)(COOR_2)$, wobei $R_1$ = H oder $CH_3$ und $R_2$ ein linearer oder verzweigter Alkylrest mit 1 bis 14 C-Atomen ist,
   b) 15 bis 40 Gew.-% (bezogen auf die Monomermischung) Isobornylacrylat,
   **dadurch gekennzeichnet, dass** die Haftklebemasse thermische Vernetzer enthält.

2. Haftklebemasse nach Anspruch 1, **dadurch gekennzeichnet, dass** als thermische Vernetzer Metallchelate, multifunktionelle Isocyanate oder multifunktionelle Amine eingesetzt werden.

3. Haftklebemasse nach Anspruch 2, **dadurch gekennzeichnet, dass** als thermischer Vernetze Aluminium-(III)-acetylacetonat, Titan-(IV)-acetylacetonat oder Eisen-(III)-acetylacetonat eingesetzt werden.

4. Haftklebemasse nach einem der vorangehenden Ansprüche, **dadurch gekennzeichnet, dass** als weitere Komponente der Monomermischung c) bis zu 30 Gew.-% olefinisch ungesättigte Monomere mit funktionellen Gruppen eingesetzt werden.

5. Haftklebemasse nach einem der vorangehenden Ansprüche, **dadurch gekennzeichnet, dass** für die Monomere der Komponente a) Acryl- und Methacrylsäureester mit Alkylgruppen bestehend aus 4 bis 14 C-Atomen eingesetzt werden.

6. Haftklebemasse nach einem der vorangehenden Ansprüche, **gekennzeichnet durch** die Beimischung von Klebharzen.

7. Haftklebemasse nach einem der vorangehenden Ansprüche, **dadurch gekennzeichnet, dass** der Haftklebemasse Weichmacher, Füllstoffe, Keimbildner, Blähmittel, Compoundierungsmittel und/oder Alterungsschutzmittel zugesetzt sind.

8. Verwendung der Haftklebemasse nach einem der vorangegangenen Ansprüche für ein ein- oder doppelseitiges Klebeband oder Transferband, bestehend zumindest aus einem Träger und einer Schicht der Haftklebemasse.

9. Verwendung nach Anspruch 8, **dadurch gekennzeichnet, dass** die Dicke der Haftklebemasse-Schicht mindestens 5 $\mu$m beträgt.

10. Verwendung nach Anspruch 8 oder 9, **dadurch gekennzeichnet, dass** für den Träger als Trägermaterialien Folien, Vliese, Schäume, Gewebe und Gewebefolien oder Trennpapiere verwendet werden.

11. Verwendung nach Anspruch 8 bis 10, **dadurch gekennzeichnet, dass** das Haftklebeband zur Verklebung auf Autolacken eingesetzt wird.

## Claims

1. Pressure-sensitive adhesive comprising a polymer formed from a monomer mixture comprising at least the following components:

   a) 60% to 85% by weight (based on the monomer mixture) of acrylic and/or methacrylic esters having the following formula $CH_2 = C(R_1)(COOR_2)$,
   where $R_1$ = H or $CH_3$ and $R_2$ is a linear or branched alkyl radical having 1 to 14 carbon atoms, and
   b) 15% to 40% by weight (based on the monomer mixture) of isobornyl acrylate, **characterized in that** the pressure-sensitive adhesive comprises thermal crosslinkers.

2. Pressure-sensitive adhesive according to Claim 1, **characterized in that** use is made as thermal crosslinkers of metal chelates, polyfunctional isocyanates or polyfunctional amines.

3. Pressure-sensitive adhesive according to Claim 2, **characterized in that** use is made as thermal crosslinkers of aluminium(III) acetylacetonate, titanium(IV) acetylacetonate or iron(III) acetylacetonate.

4. Pressure-sensitive adhesive according to any one of the preceding claims, **characterized in that** as a further component of the monomer mixture use is made of

   c) up to 30% by weight of olefinically unsaturated monomers containing functional groups.

5. Pressure-sensitive adhesive according to any one of the preceding claims, **characterized in that** for the monomers of component a) use is made of acrylic and methacrylic esters having alkyl groups consisting of 4 to 14 carbon atoms.

6. Pressure-sensitive adhesive according to any one of the preceding claims, **characterized by** the admixing of tackifier resins.

7. Pressure-sensitive adhesive according to any one of the preceding claims, **characterized in that** plasticizers, fillers, nucleators, expandants, compounding agents and/or aging inhibitors have been added to the pressure-sensitive adhesive.

8. Use of the pressure-sensitive adhesive according to any one of the preceding claims for a single-sided or double-sided adhesive tape or transfer tape composed at least of a carrier and a layer of the pressure-sensitive adhesive.

9. Use according to Claim 8, **characterized in that** the thickness of the pressure-sensitive adhesive layer is at least 5 µm.

10. Use according to Claim 8 or 9, **characterized in that** for the carrier use is made of films, nonwovens, foams, woven fabrics and woven films, or of release papers, as carrier materials.

11. Use according to Claim 8 to 10, **characterized in that** the pressure-sensitive adhesive tape is used for bonding to automotive finishes.

## Revendications

1. Composition adhésive autocollante comprenant un polymère à base d'un mélange de monomères constitué au moins des composants suivants :

   a) de 60 à 85 % en poids (par rapport au mélange de monomères) d'esters acryliques et/ou d'esters métha-

cryliques de formule suivante : $CH_2 = C(R_1)(COOR_2)$, dans laquelle $R_1$ représente un atome d'hydrogène ou un groupe $CH_3$ et $R_2$ représente un radical alkyle linéaire ou ramifié renfermant de 1 à 14 atomes de carbone,
b) de 15 à 40 % en poids (par rapport au mélange de monomères) d'acrylate d'isobornyle,

**caractérisée en ce que** la composition adhésive autocollante comprend des agents de réticulation thermiques.

2. Composition adhésive autocollante selon la revendication 1, **caractérisée en ce que** l'on utilise, en tant qu'agents de réticulation thermiques, des chélates métalliques, des isocyanates multifonctionnels ou des amines multi-fonctionnelles.

3. Composition adhésive autocollante selon la revendication 2, **caractérisée en ce que** l'on utilise, en tant qu'agents de réticulation thermiques, de l'acétylacétonate d'aluminium (III), de l'acétylacétonate de titane (IV) ou de l'acétylacétonate de fer (III).

4. Composition adhésive autocollante selon l'une quelconque des revendications précédentes, **caractérisée en ce que** l'on utilise, en tant que composant supplémentaire du mélange de monomères,

c) jusqu'à 30 % en poids de monomères oléfiniquement insaturés renfermant des groupes fonctionnels.

5. Composition adhésive autocollante selon l'une quelconque des revendications précédentes, **caractérisée en ce que** l'on utilise, pour les monomères du composant a), des esters acryliques et méthacryliques renfermant des groupes alkyle constitués de 4 à 14 atomes de carbone.

6. Composition adhésive autocollante selon l'une quelconque des revendications précédentes, **caractérisée par** le mélangeage de résines collantes.

7. Composition adhésive autocollante selon l'une quelconque des revendications précédentes, **caractérisée en ce que** des agents plastifiants, des charges, des agents de nucléation, des agents d'expansion, des agents de compoundage et/ou des inhibiteurs du vieillissement ont été ajoutés à la composition adhésive autocollante.

8. Utilisation de la composition adhésive autocollante selon l'une quelconque des revendications précédentes pour un ruban adhésif ou un ruban de transfert à une ou deux faces, constitué d'au moins un support et d'une couche de la composition adhésive autocollante.

9. Utilisation selon la revendication 8, **caractérisée en ce que** l'épaisseur de la couche de composition adhésive autocollante est d'au moins 5 $\mu$m.

10. Utilisation selon la revendication 8 ou 9,
**caractérisée en ce que** l'on utilise, pour le support, des feuilles, des non-tissés, des mousses, des étoffes tissées et des feuilles tissées, ou des papiers anti-adhérents, en tant que matières de support.

11. Utilisation selon les revendications 8 à 10,
**caractérisée en ce que** le ruban adhésif autocollant est utilisé pour l'adhésion à des revêtements d'automobiles.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 01315409 A
- WO 9513328 A
- US 4339485 A
- US 5925456 A
- US 4358494 A
- WO 9801478 A1
- US 4581429 A
- WO 9813392 A1
- EP 735052 A1
- WO 9624620 A1
- WO 9844008 A1
- DE 19949352 A1
- EP 0824111 A1
- EP 826698 A1
- EP 824110 A1
- EP 841346 A1
- EP 850957 A1
- US 5945491 A
- US 5854364 A
- US 5789487 A


### In der Beschreibung aufgeführte Nicht-Patentliteratur


- **DONATAS SATAS.** Handbook of Pressure Sensitive Adhesive Technology. van Nostrand, 1989
- **T.G. FOX.** *Bull. Am. Phys. Soc.,* 1956, vol. 1, 123
- **HOUBEN WEYL.** *Methoden der Organischen Chemie,* vol. E 19a, 60-147
- *Macromolecules,* 1995, vol. 28, 7886
- **HAWKER.** *Beitrag zur Hauptversammlung der American Chemical Society,* 1997
- **HUSEMANN.** *Beitrag zum IUPAC World-Polymer Meeting,* 1998
- **INKS ; PAINTS.** *Chemistry and Technology of UV and EB formulation for Coatings,* 1991, vol. 1